# EUROPEAN PATENT SPECIFICATION

(11) **EP 3 311 366 B1**
(45) Date of publication and mention of the grant of the patent: **24.08.2022**
(21) Application number: 16812439.4
(22) Date of filing: 16.06.2016
(51) Int. Cl.: G06T 11/20

(54) **HYBRID MAP DRAWING DISPLAY**
HYBRIDKARTENZEICHNUNGSANZEIGE
DISPOSITIF D'AFFICHAGE DE DESSIN DE CARTE HYBRIDE

(30) Priority: 17.06.2015 US 201514742548
(43) Date of publication of application: 25.04.2018
(73) Proprietor: Tom Sawyer Software, Berkeley, CA 94707 (US)
(72) Inventor: OPMANIS, Rudolfs, 1058 Riga (LV); RUZGIS, Aigars, 2121 Salaspils (LV); MADDEN, Brendan, Berkely, CA 94707 (US)
(74) Representative: sgb europe
(86) International application number: PCT/US2016/037878
(87) International publication number: WO 2016/205519

(56) References cited:
- US-A1- 2003 182 052
- US-A1- 2005 197 763
- US-A1- 2007 280 165
- US-A1- 2008 050 024
- US-A1- 2013 127 862
- Helpsystems: "InterMapper User Guide Version 5.7 - Chapter 16", , 1 August 2013 (2013-08-01), pages 585-598, XP055678831, Retrieved from the Internet: URL:https://www.scribd.com/document/256055 500/InterMapper-User-Guide-pdf [retrieved on 2020-03-23]

## Description

Various visualization techniques are used to manage and efficiently use large data sets both in exploratory and presentation data visualization. If data contains geographically linked data, then a geographical map view or an interactive geographical map view can be used to visualize the data and show data-driven markers on the map surface. If data does not contain meaningful geographical information or it is not available for all data objects, then the data's logical relationships can be visualized using graph-based drawings or interactive graph-based drawing views.

Map views are interactive views that show a geographical map in the background and various data-driven objects in the foreground. Map foreground objects are:
- Geographical markers - visual icons that are positioned in precise geographical locations at a predefined range of zoom levels.
- Geographical polylines - lines with bend points at the specified geographical locations, usually with geographical markers at the source and target locations.
- Map overlays - visualization of a function that maps a color value to each geographical location. Overlays are used to visualize heat maps where the value of a data attribute is mapped to the color gradient.

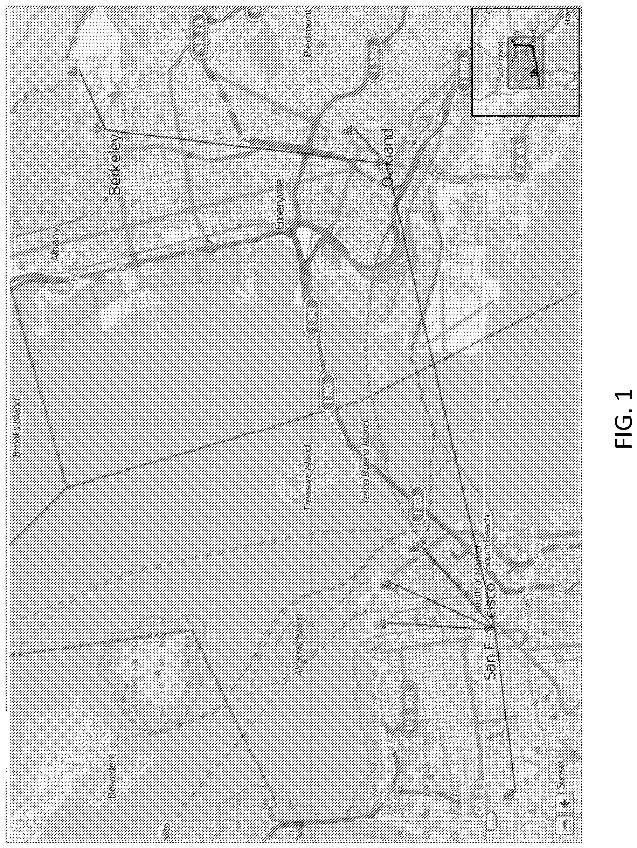

As used herein, the map view refers to an abstract geographic view with features that are present in one or more popular map view services and GIS provider products such as Google Maps, Bing, OpenStreetMap, Yahoo Maps and ESRI ArcGIS mapping platform. An example of a map view is shown in FIG. 1.

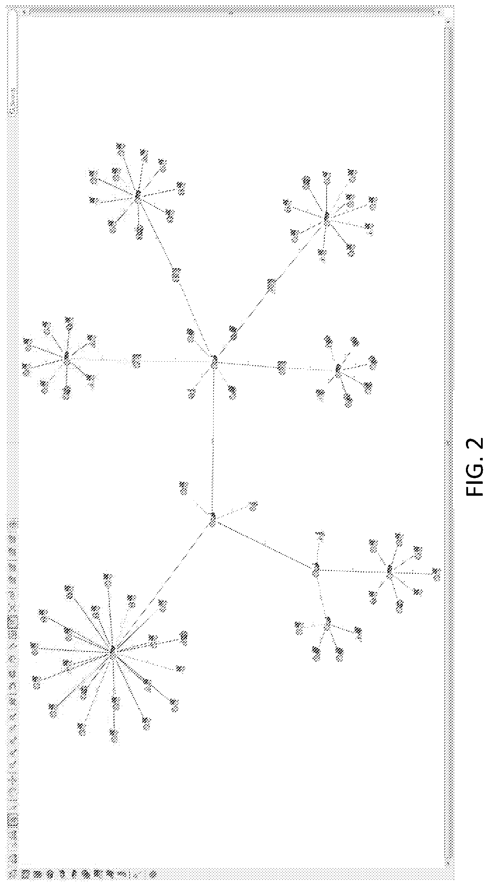

Drawing views are interactive views that show logical relationships between data objects. An example of a drawing view is shown in FIG. 2. Although similar visualization features are provided by various vendors such as Tom Sawyer Software, yWorks, KeyLines and others, as used herein the drawing view and all its features refer to the graph-based drawing visualization technology provided by Tom Sawyer Software, as described more fully in the attached Appendix.

Data objects in drawing views can be described using these graphical and structural objects:
- Graph objects such as nodes, edges, connectors, node labels, edge labels, and connector labels. Each of these objects, including the graph-based drawing itself, can be styled to visualize relevant data properties using icons, colors, and shapes based on drawing view zoom level.
- Separation, grouping, alignment, and sequence geometrical constraints between nodes.
   - The separation constraint is a geometrical constraint between two sets of nodes that positions the first set of nodes away from the second set of nodes by a specified distance in either a horizontal or vertical direction, depending on user input.
   - The grouping constraint is a geometrical constraint for a set of nodes that positions grouped nodes compactly and avoids positioning other nodes in the convex hull of the grouped nodes.
   - The alignment constraint is a constraint for a set of nodes that positions nodes aligned by their center coordinates or by sides either vertically or horizontally.
   - The sequence constraint positions a list of nodes to ensure that the nodes are positioned in a given order in the specified direction.
- Edge attachment side constraints specify the side of a node to which edges can connect.
- Data objects in drawing views can also be described using nested drawings.

Graph-based drawings can be nested inside nodes or edges, which is particularly important for data complexity management. When a node or an edge in one drawing maintains a parent-child relationship with another drawing, we say that the child drawing is nested in a node or an edge. These relationships can mirror the inherent hierarchical structure of the data.

If a child drawing of a node is visible at the same time as its parent drawing, then that parent node is said to be expanded. Otherwise, it is said to be collapsed. Interdrawing edges can connect nodes from different drawings if both source and target nodes are visible. If just some part of an interdrawing edge is visible then the interdrawing edge is not rendered but the visible part of it is substituted with a meta-edge.

Tom Sawyer Software provides several general purpose and specialized automatic graph layout styles. The type and size of the data set determine the most suitable automatic graph layout style and edge routing style. Users can choose from these four general purpose graph layout styles to best fit the nature of the data: circular, hierarchical, orthogonal and symmetric.
- The circular layout style emphasizes clusters inherent in the drawing topology.
- The hierarchical layout style emphasizes dependency relationships.
- The orthogonal layout style produces compact drawings, primarily using horizontal and vertical edge routing.
- The symmetric layout style emphasizes symmetries inherent in the drawing topology, while ensuring that adjacent nodes are close to each other. Some vendors refer to this layout style as an organic layout style or as a spring-embedder layout style.

US 2007/280165 A1 relates to wireless mesh networks and corresponding graphical user interfaces. A disclosed method includes displaying a geographical map illustrating locations of a plurality of wireless nodes of a mesh network and displaying a hierarchically-arranged filter that shows a hierarchical relation of the plurality of wireless nodes. The method further comprises receiving a filter configuration and displaying in the geographical map a subset of the plurality of wireless nodes based on the filter configuration.

US 2003/182052 A1 discloses an integrated routing/mapping information system. An Integrated Routing/Mapping Information System (IRMIS) links desktop personal computer cartographic applications to one or more handheld organizer, personal digital assistant (PDA) or "palmtop" devices. The IRMIS may include the capability to provide an interactive computer travel-planning guide for determining a route between a user selected travel origin and travel destination following user selected intermediate waypoints along the way. System software determines the preferred travel route within user selected constraints. The user can also select among a plurality of types of geographically locatable points of interest (POIs) within a user-defined region of interest along the travel route. A database enables the incorporation of travel information such as graphics, photos, videos, animations, audio and text information about the user selectable POIs along the way as well as about transportation routes and waypoints. From the user selected and user-defined transportation routes, waypoints, and POIs along the travel route, the software constructs a user customized multimedia travelog for preview on a computer display of the user-defined travel route. Based on the user-customized previews, the travel route including transportation routes, waypoints, and points of interest can be updated or changed according to the user preferences and choices. Modified travel routes can be previewed with further multimedia travelogs until a satisfactory travel route is achieved. The user can output a travel plan, i.e.; downloading waypoints electronically and/or printing out maps with route indications and text travel directions.

US 2013/127862 A1 relates to a method of forming a relative location map based on user-specified decision criteria. The method comprises: selecting a first location, the first location comprising at least a first location data structure; receiving at least one criterion, the at least one criterion having corresponding values retrieved using at least a portion of the first data structure; and forming, using an application server, a first graph, the first graph depicting a first node corresponding to the first location, at least one second node, the second node corresponding to a second location, and an edge between the first node, and the second node; wherein the at least one edge display characteristic of the edge is determined based on the at least one criterion.

US 2005/197763 A1 teaches key-based advanced navigation techniques. The document relates to a system and/or methodology that facilitate navigating and/or browsing large information spaces on relatively small portable devices such as portable phones, PDAs and the like, for example. In particular, the system and method allow navigation of multi-resolution graphical content at multiple levels of magnification. As a result, a user can quickly choose between a fixed number of view configurations at a given zoom level.

US 2008/050024 A1 discloses a method for encoding or serving geospatial or other vector data as images. A representative method of transmitting information indicative of an image comprising transmitting one or more nodes of information as a first image, transmitting a second image including information indicative of vectors defining characteristics to be utilized for display at predetermined locations in said first image, and transmitting a third image comprising a mapping between said first and second images such that a receiver of said first and second images can correlate said first and second images to utilize said vectors at said predetermined locations.

For large/complex data sets, map views have at least three major problems:
- Map views are not capable of visualizing data objects without associated geographical information, so either map views can show only the geographically-linked data subset or the visualization system needs to assign artificial geographic coordinates to all visualized objects, which skews the produced data and their visualization.
- Currently available map-based solutions lack automatic layouts and edge routers, which are necessary to automatically position labels, edge crossing jump overs, and other graphical elements that are available in a typical drawing view solution and would also be useful in map views.
- For complex data sets, the only solution for complexity management is data filtering when the map view visualizes only a subset of the whole data set; however, there is no way to mirror the inherent hierarchical structure of the data with marker nesting and visualize relationships between objects from different structural groups.

Drawing views can visualize any linked data, but they cannot visualize correct geographic locations for objects that have geographical information. If geographical information is provided and it is important to visualize it, then it is possible to use geometric constraints to mimic relative geographic positioning, but exact node positioning over the map is not possible.

An object thus exists to visualize data sets, including large and complex data sets with geographically-linked data and logic data.

The object is solved by the subject matter of the independent claims.

Specifically, a method of displaying information using a computer is described. The method comprises:
- the computer producing from information that includes graph information and place information a graph drawing comprising a plurality of nodes and a plurality of edges;
- the computer retrieving map information corresponding to the place information; and
- the computer displaying a view comprising an overlay of the graph drawing and the map information; wherein
- for a plurality geographically-linked nodes, geographic information is linked,
- the plurality of geographically-linked nodes are positioned over the correct position on the map according to the linked geographic information; and
- a plurality of logical nodes having no geographic location are positioned using an automatic graph layout, the automated graph layout taking into consideration the positions of the plurality of geographically-linked nodes. The plurality of geographically-linked nodes is different from the plurality of logical nodes.

A hybrid map view is described herein that contains the features of both a map view and a drawing view. The hybrid view is implemented as a drawing view that has the map set as the graph background and nodes that have geographical information automatically placed over the correct position on the map. The automatic graph layouts are configured to take these node positions as fixed and are not allowed to change. Each graph in the nesting hierarchy can be separately configured to either show a map view or a local view. For each expanded child drawing, the user can separately set the zoom level and therefore configure the level of detail of the data visualization.

The present invention may be further understood from the following detailed description in conjunction with the appended drawing figures. In the drawings :
FIG. 1 illustrates a typical map view of a type provided by various map providers,
FIG. 2 is a diagram of a typical drawing view of a graph,
FIG. 3A, a diagram is shown of a system for producing a hybrid map or drawing ("hybrid map drawing") view,
FIG. 3B is a flowchart illustrating the steps in creating a hybrid map view,
FIG. 4 is a hybrid map drawing view with geographically linked and non-linked nodes,
FIG. 5 is a hybrid map drawing view below a user specified zoom threshold,
FIG. 6 is a hybrid map drawing view above a user specified zoom threshold,
FIG. 7 is a hybrid map drawing view with nested maps showing multiple maps simultaneously,
FIG. 8 is a diagram of a computer system with which the present invention may be used,
FIG. 9 is a hybrid map drawing view with compacted multiple maps,
FIG. 10 is a hybrid map drawing view example with mixed geographically-linked graphs and simple graphs, and
FIG. 11 is another hybrid map drawing view example with mixed geographically-linked graphs and simple graphs.

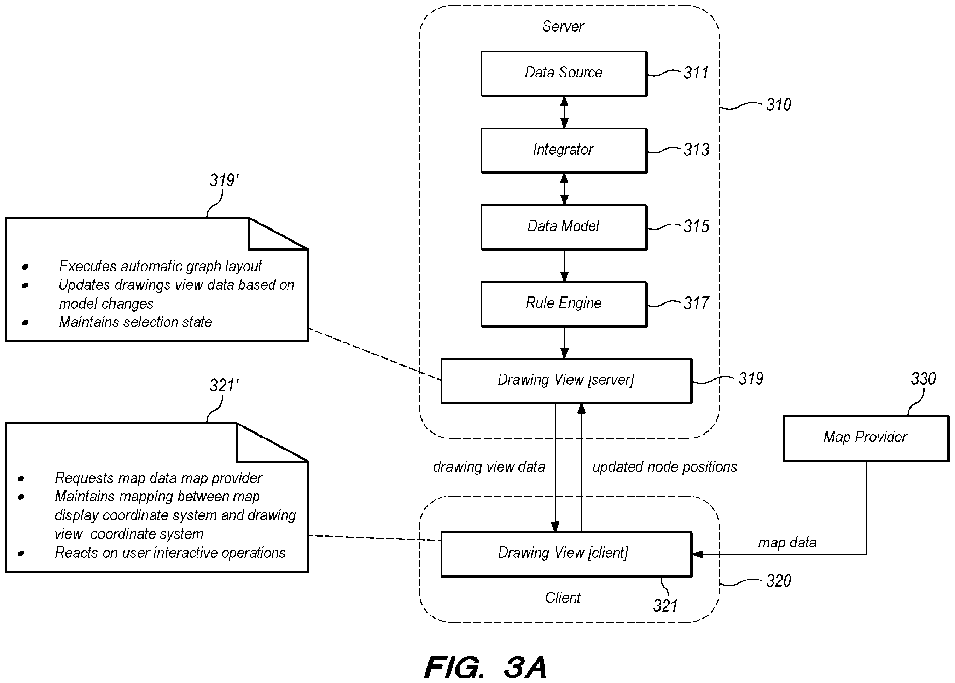

Referring now to FIG. 3A, a diagram is shown of a system for producing a hybrid map drawing view. In one embodiment, drawing data is output from a graph drawing application and input to a browser; the graph drawing tool also gets map data from a data source and inputs it to the browser to produce a hybrid map drawing view.

The hybrid map drawing view may be implemented as a web view in which the overall system is divided in two components, a server-side component 310 and a client-side component 320. The server component 310 runs a graph drawing program, for example the Tom Sawyer Perspectives framework available from the present assignee. The server component 310 using data integrators 313 loads data from one or more data sources 311 into data model 315, then runs a rule engine 317 that, based on input data, creates a drawing view 319 with complete graph topology (nodes, edges and other graph objects). As shown in block 319', among the functions performed by the drawing view block 319 are to execute automatic graph layout, update the drawing view data based on model changes, and maintain selection state. A hybrid map drawing view may also be implemented as a desktop view where the client and server components are deployed in the same environment.

Once the server component 310 has the drawing view ready, it sends the drawing view over to the client component 320. A drawing view block 321 of the client component 320 receives the drawing view data (graph topology, toolbars, etc.) and recognizes which graphs needs maps in the background. As shown in block 321', if there are graphs that need map in the background, then the client component connects to a map provider service 330, retrieves map information, and moves geographically linked nodes to the correct geographical positions. The client component maintains a mapping between a drawing view coordinate system and a map coordinate system. It also makes sure that the mapping between these coordinate systems is updated after interactive operations such as zooming, panning, etc. When the client component moves geographically-linked nodes to their positions, it also sends data back to the server so that it can use this information in automatic graph layout.

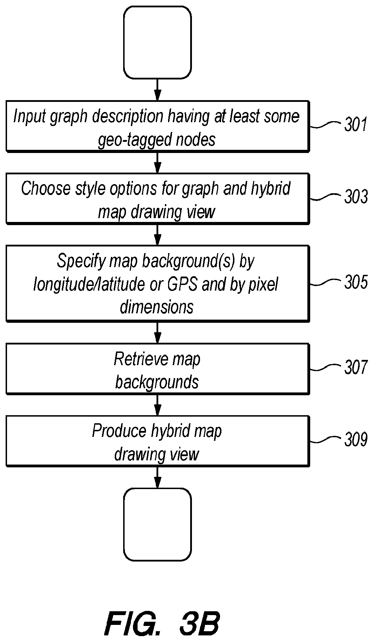

The foregoing process may be summarized in accordance with FIG. 3B, showing a flow chart of steps for producing a hybrid map drawing view. In step 301, a graph description is input, the graph description having at least some geo-tagged nodes. In step 303, style options for the graph and the for the hybrid map drawing view are chosen, and graph layout is performed. Depending on the style, one or more map backgrounds are specified by longitude/latitude or GPS and by pixel dimensions. The map backgrounds are retrieved, e.g., using an API of a selected map provider. A combined display (hybrid map drawing view) is then produced.

The following examples illustrate advantageous features of the present approach.

### Mixed geographically-linked items and logical items

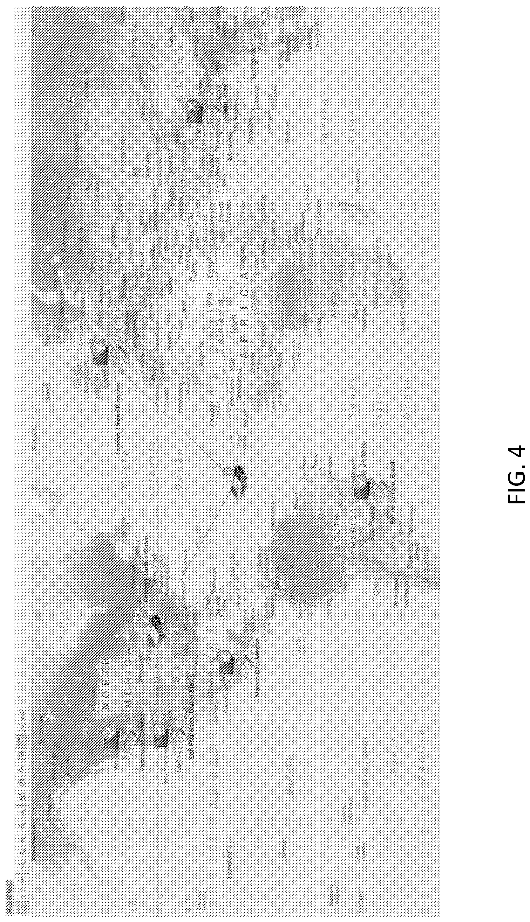

In cases where the data set contains objects with meaningful geographic information, the graph objects are positioned in correct positions according to the underlying map view. All other logical graph objects without geographical positions are positioned by automatic graph layout, which also considers geographically fixed object positions. FIG. 4 illustrates the hybrid map view with six geographically-linked nodes (in this case computers and a web server) and logical nodes without geographic location (routers) that are positioned by automatic graph layout considering the geographically fixed neighbor locations.

### Seamless switch between logical and geographical views

Using zoom-level thresholds, it is possible to show geographically-correct drawings at lower zoom levels, but when the user zooms in to view a particular region, it is possible to remove the map from the graph-based drawing background, apply an automatic graph layout style, and present a graph-based drawing where node positions are only driven by their logical connections to other objects.

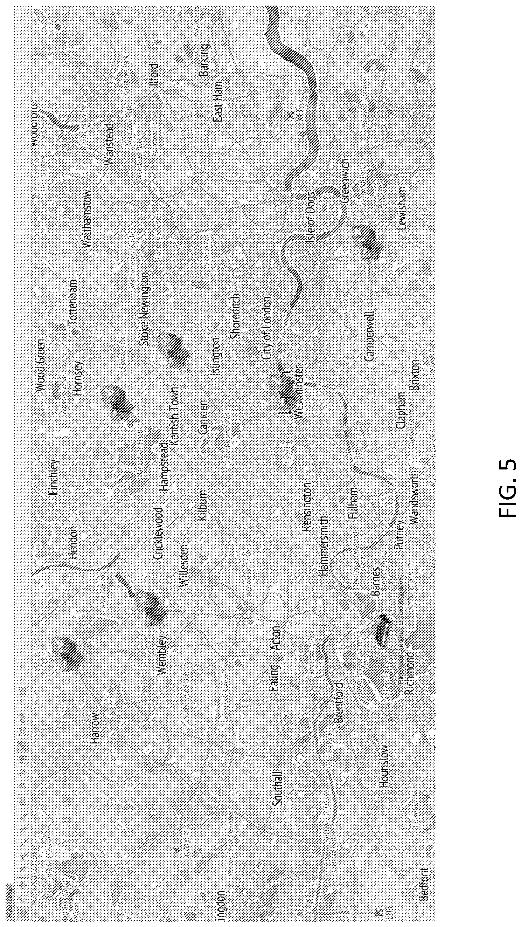

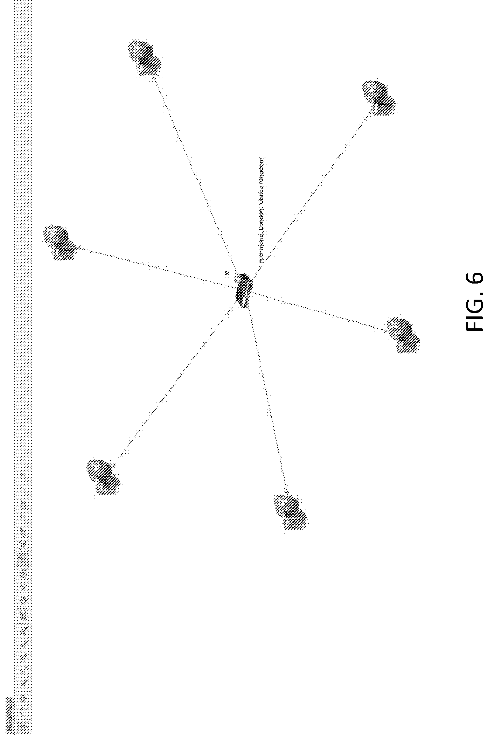

FIG. 5 and FIG. 6 illustrate drawing appearance differences based on zoom level changes. When the user zooms in to a zoom level where the locations of all objects can be seen, then the map is drawn in the background and all geographically linked nodes are positioned in their geographic locations (FIG. 5). But when the user zooms in and wants to see more detail, the predefined zoom level threshold map background is removed and nodes are arranged according to their logical connections, not their geographical connections (FIG. 6). The system can also be configured in the other order such that the zoomed out version shows the logical view to give a rough understanding about the overall structure, and when user zooms in and crosses the zoom level threshold, the map is drawn in the background and nodes are positioned according to their geographic locations.

### Nested maps for complexity management

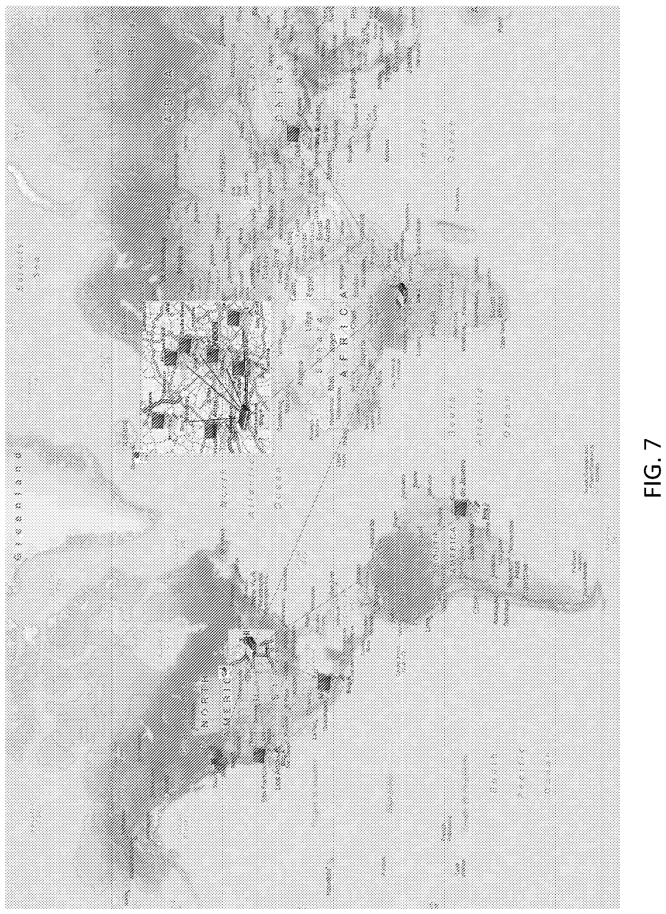

Currently-known map views do not provide a way to show a map inside another map, but it is easily accomplished with the hybrid map drawing view. For example, it is possible to show the whole-world map to see the big picture and expand any node from the main drawing to show details about the contents of the expanded nodes-all the while being able to view the world map simultaneously. FIG. 7 illustrates the ability to show multiple maps at the same time. The base drawing is a world map showing general connections, but expanded nodes in London, and over Chicago at the same time, show detailed connectivity information inside these cities. Note that nested maps are independent of one another and can use different maps or the same map with different overlays. The user can resize expanded nodes and therefore change the level of detail inside child drawings. The user can also explore each of these locations in more detail by drilling in to child graphs, or can possibly zoom the map selectively within the contents of the fixed-size expanded node.

### Compactness of multiple maps

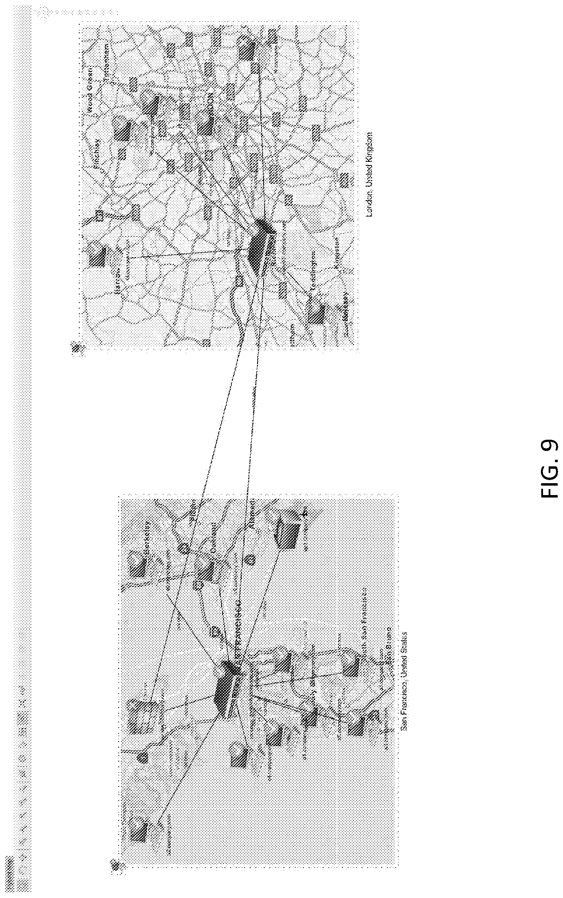

When geographically-linked data is distributed sparsely in clusters across the map, ordinary map views would have to show the whole map including big unused areas. Then the user would not be able to see details of each cluster without zooming in to each of them separately. FIG. 9 illustrates how the hybrid map drawing view handles geographically-linked devices that are grouped into two clusters, with one cluster of devices located in the San Francisco region and the second cluster of devices located in London. In ordinary map views, it would be necessary to show the whole map between San Francisco and London to show the same information, even though this space is not filled with relevant data. The hybrid view allows the presentation of all information in a more compact manner by showing devices of each cluster in separate maps. Thus, the root, or top-level, drawing can be set as a logical graph-based drawing, and geographically important details of each cluster are visualized in two separate maps.

### Mixed geographically linked graphs and simple graphs

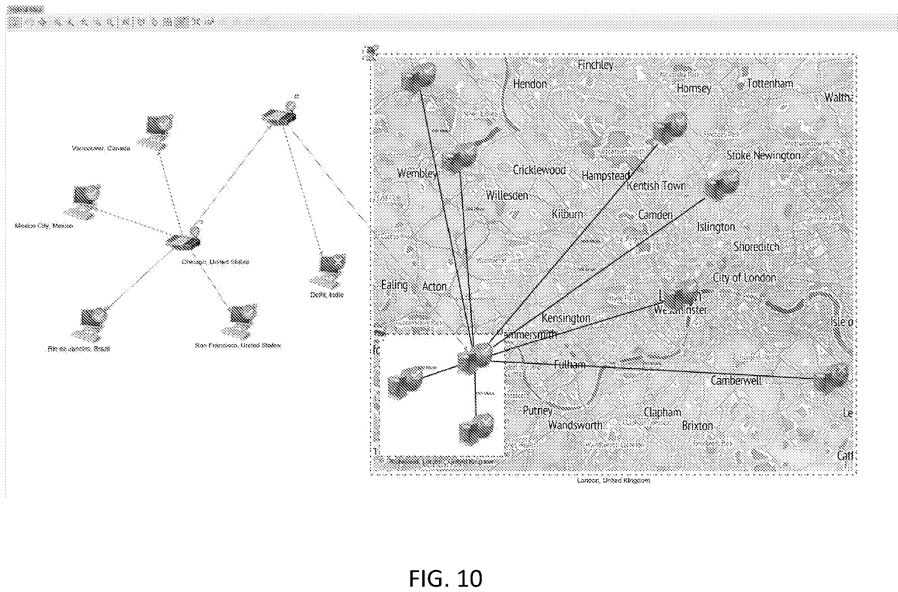

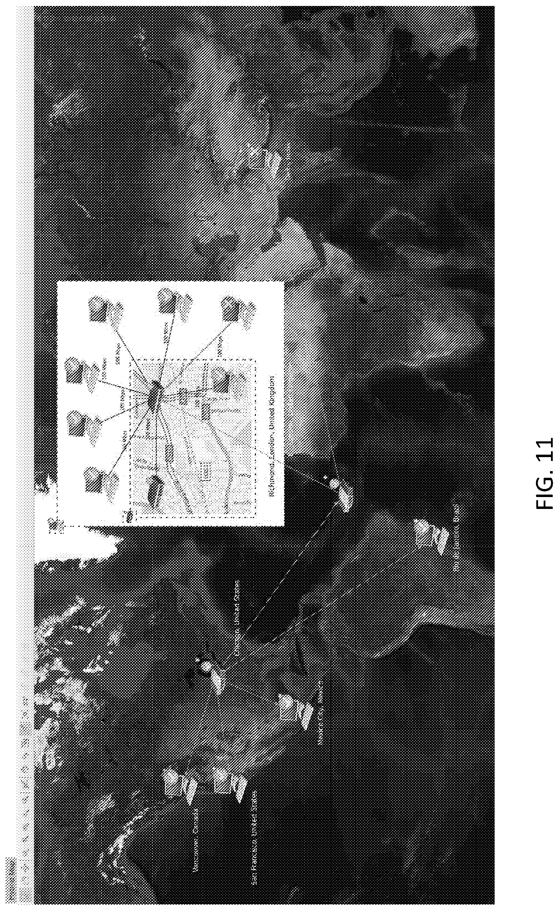

Any graph in this drawing view can be set separately to obey node geographic positions and show a map in the background or to show just logical connections. FIG. 10 and FIG. 11 illustrate examples of how a hybrid map drawing view visualizes mixed geographically-linked graphs and simple graphs.

### Exemplary hardware environment

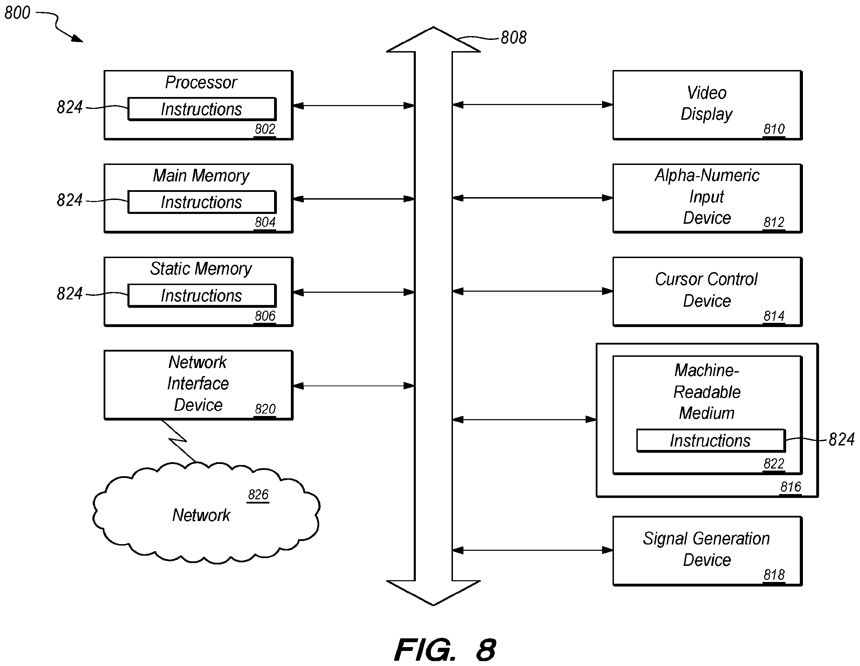

FIG. 8 depicts an illustrative diagrammatic representation of a machine in the form of a computer system 800 within which a set of instructions, when executed, may cause the machine to perform any one or more of the methodologies discussed above. In some embodiments, the machine operates as a standalone device. In some embodiments, the machine may be connected (e.g., using a network) to other machines. In a networked deployment, the machine may operate in the capacity of a server or a client user machine in server-client user network environment, or as a peer machine in a peer-to-peer (or distributed) network environment.

The machine may comprise a server computer, a client user computer, a personal computer (PC), a tablet PC, a mobile phone, a laptop computer, a desktop computer, a control system, a network router, switch or bridge, or any machine capable of executing a set of instructions (sequential or otherwise) that specify actions to be taken by that machine. It will be understood that a device of the present disclosure includes broadly any electronic device that provides voice, video or data communication. Further, while a single machine is illustrated, the term "machine" shall also be taken to include any collection of machines that individually or jointly execute a set (or multiple sets) of instructions to perform any one or more of the methodologies discussed herein.

The computer system 800 may include a processor 802 (e.g., a central processing unit (CPU), a graphics processing unit (GPU, or both), a main memory 804 and a static memory 806, which communicate with each other via a bus 808. The computer system 800 may further include a video display unit 810 (e.g., a liquid crystal display (LCD), a flat panel, a solid state display, or a cathode ray tube (CRT)). The computer system 800 may include an input device 812 (e.g., a keyboard), a cursor control device 814 (e.g., a mouse), a disk drive unit 816, a signal generation device 818 (e.g., a speaker or remote control) and a network interface device 820.

The disk drive unit 816 may include a computer-readable medium 822 on which is stored one or more sets of instructions (e.g., software 824) embodying any one or more of the methodologies or functions described herein, including those methods illustrated above. The instructions 824 may also reside, completely or at least partially, within the main memory 804, the static memory 806, and/or within the processor 802 during execution thereof by the computer system 800. The main memory 804 and the processor 802 also may constitute computer-readable media.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The present disclosure contemplates a machine readable medium containing instructions 824, or that which receives and executes instructions 824 from a propagated signal so that a device connected to a network environment 826 can send or receive voice, video or data, and to communicate over the network 826 using the instructions 824. The instructions 824 may further be transmitted or received over a network 826 via the network interface device 820.

While the computer-readable medium 822 is shown in an example embodiment to be a single medium, the term "computer-readable medium" should be taken to include a single medium or multiple media (e.g., a centralized or distributed database, and/or associated caches and servers) that store the one or more sets of instructions. The term "computer-readable medium" shall also be taken to include any medium that is capable of storing, encoding or carrying a set of instructions for execution by the machine and that cause the machine to perform any one or more of the methodologies of the present disclosure.

The term "computer-readable medium" shall accordingly be taken to include, but not be limited to: solid-state memories such as a memory card or other package that houses one or more read-only (non-volatile) memories, random access memories, or other re-writable (volatile) memories; magneto-optical or optical medium such as a disk or tape; and/or a digital file attachment to e-mail or other self-contained information archive or set of archives is considered a distribution medium equivalent to a tangible storage medium. Accordingly, the disclosure is considered to include any one or more of a computer-readable medium or a distribution medium, as listed herein and including art-recognized equivalents and successor media, in which the software implementations herein are stored.

## Claims

1. . A method of displaying information using a computer (800), comprising:
the computer (800) producing, from information that includes graph information and geographic information, a graph drawing comprising a plurality of nodes and a plurality of edges;
the computer (800) retrieving map information corresponding to the geographic information; and
the computer (800) displaying a view comprising an overlay of the graph drawing and the map information; wherein the plurality of nodes comprises a plurality geographically-linked nodes which are linked to geographic information comprising a geographic location, and a plurality of logical nodes having no geographic location,
**characterized in** the following steps:
- positioning the plurality of geographically-linked nodes over the correct position on the map according to the linked geographic information; and
- positioning the plurality of logical nodes using an automatic graph layout, the automated graph layout taking into consideration the positions of the plurality of geographically-linked nodes, wherein
the plurality of geographically-linked nodes is different from the plurality of logical nodes.

2. . The method of claim 1, wherein for some of the plurality of geographically-linked nodes, the linked geographic information of the respective node within the view coincides with a map position where a physical entity represented by the respective node is physically located.

3. . The method of claim 1, wherein the map information comprises first map information and second map information, the second map information representing a larger, more detailed view of a portion of a map represented by the first map information.

4. . The method of claim 1, wherein the map information comprises first map information and second map information, wherein the computer (800) displays the view with a first map represented by the first map information and a second map represented by the second map information being separated from one another, and with the graph drawing overlying both the first map and the second map.

5. . The method of claim 1, wherein the computer (800) displays the view with an inset showing one or more nodes and one or more edges and overlying a map represented by the map information, the inset being devoid of map features.

6. . The method of claim 1, wherein the computer (800) displays the view such that a map represented by the map information underlies only a first portion of the graph drawing, a second different portion of the graph drawing comprising a plurality of nodes and a plurality of edges and being devoid of map features.

7. . A non-transitory computer-readable medium comprising instructions for implementing the method of claim 1.

8. . The non-transitory computer-readable medium of claim 7, wherein for some of the plurality of geographically-linked nodes, the linked geographic information of the respective node within the view coincides with a map position where a physical entity represented by the respective node is physically located.

9. . The non-transitory computer-readable medium of claim 7, wherein the map information comprises first map information and second map information, the second map information representing a larger, more detailed view of a portion of a map represented by the first map information.

10. . The non-transitory computer-readable medium of claim 7, wherein the map information comprises first map information and second map information, wherein the computer (800) displays the view with a first map represented by the first map information and a second map represented by the second map information being separated from one another, and with the graph drawing overlying both the first map and the second map.

11. . The non-transitory computer-readable medium of claim 7, wherein the computer (800) displays the view with an inset showing one or more nodes and one or more edges and overlying a map represented by the map information, the inset being devoid of map features.

12. . The non-transitory computer-readable medium of claim 7, wherein the computer (800) displays the view such that a map represented by the map information underlies only a first portion of the graph drawing, a second different portion of the graph drawing comprising a plurality of nodes and a plurality of edges and being devoid of map features.

## Patentansprüche

1. Verfahren zum Anzeigen von Informationen unter Verwendung eines Computers (800), umfassend:
Erzeugen, durch den Computer (800), einer Graphenzeichnung, die eine Vielzahl von Knoten und eine Vielzahl von Rändern umfasst, aus Informationen, die Grapheninformationen und geografische Informationen umfassen;
Abrufen, durch den Computer (800), von Karteninformationen, die den geografischen Informationen entsprechen; und
Anzeigen, durch den Computer (800), einer Ansicht, die eine Überlagerung der Graphenzeichnung und der Karteninformationen umfasst;
wobei die Vielzahl von Knoten eine Vielzahl von geografisch verknüpften Knoten, die mit geografischen Informationen verknüpft sind, die einen geografischen Ort umfassen, und eine Vielzahl von logischen Knoten umfassen, die keinen geografischen Ort aufweisen,
**gekennzeichnet durch** die folgenden Schritte:
- Positionieren der Vielzahl von geografisch verknüpften Knoten über der richtigen Position auf der Karte gemäß den verknüpften geografischen Informationen; und
- Positionieren der Vielzahl von logischen Knoten unter Verwendung eines automatischen Graphenlayouts, wobei das automatisierte Graphenlayout die Positionen der Vielzahl von geografisch verknüpften Knoten berücksichtigt, wobei die Vielzahl von geografisch verknüpften Knoten sich von der Vielzahl von logischen Knoten unterscheiden.

2. Verfahren nach Anspruch 1, wobei für einige von der Vielzahl von geografisch verknüpften Knoten die verknüpften geografischen Informationen des entsprechenden Knotens innerhalb der Ansicht mit einer Kartenposition zusammenfallen, an der eine physikalische Einheit, die von den entsprechenden Knoten dargestellt wird, sich physikalisch befindet.

3. Verfahren nach Anspruch 1, wobei die Karteninformationen erste Karteninformationen und zweite Karteninformationen umfassen, wobei die zweiten Karteninformationen eine größere, detailliertere Ansicht eines Abschnitts einer von den ersten Karteninformationen dargestellten Karte darstellen.

4. Verfahren nach Anspruch 1, wobei die Karteninformationen erste Karteninformationen und zweite Karteninformationen umfassen, wobei der Computer (800) die Ansicht mit einer ersten Karte, die von den ersten Karteninformationen dargestellt wird, und einer zweiten Karte, die von den zweiten Karteninformationen dargestellt wird, getrennt voneinander und mit der sowohl die erste Karte als auch die zweite Karte überlagernden Graphenzeichnung anzeigt.

5. Verfahren nach Anspruch 1, wobei der Computer (800) die Ansicht mit einer Einlage anzeigt, die einen oder mehrere Knoten und einen oder mehrere Ränder zeigt und eine Karte überlagert, die von den Karteninformationen dargestellt wird, wobei die Einlage keine Kartenmerkmale aufweist.

6. Verfahren nach Anspruch 1, wobei der Computer (800) die Ansicht derart anzeigt, dass eine von den Karteninformationen dargestellte Karte nur unter einem ersten Abschnitt der Graphenzeichnung liegt, wobei ein zweiter, unterschiedlicher Abschnitt der Graphenzeichnung eine Vielzahl von Knoten und eine Vielzahl von Rändern umfasst und keine Kartenmerkmale aufweist.

7. Nichtflüchtiger computerlesbarer Datenträger, der Anweisungen zum Umsetzen des Verfahrens nach Anspruch 1 umfasst.

8. Nichtflüchtiger computerlesbarer Datenträger nach Anspruch 7, wobei für einige der Vielzahl von geografisch verknüpften Knoten die verknüpften geografischen Informationen des entsprechenden Knotens innerhalb der Ansicht mit einer Kartenposition zusammenfallen, an der eine physikalische Einheit, die von dem entsprechenden Knoten dargestellt wird, sich physikalisch befindet.

9. Nichtflüchtiger computerlesbarer Datenträger nach Anspruch 7, wobei die Karteninformationen erste Karteninformationen und zweite Karteninformationen umfassen, wobei die zweiten Karteninformationen eine größere, detailliertere Ansicht eines Abschnitts einer von den ersten Karteninformationen dargestellten Karte darstellen.

10. Nichtflüchtiger computerlesbarer Datenträger nach Anspruch 7, wobei die Karteninformationen erste Karteninformationen und zweite Karteninformationen umfassen, wobei der Computer (800) die Ansicht mit einer ersten Karte, die von den ersten Karteninformationen dargestellt wird, und einer zweiter Karte, die von den zweiten Karteninformationen dargestellt wird, getrennt voneinander und mit der sowohl die erste Karte als auch die zweite Karte überlagernden Graphenzeichnung anzeigt.

11. Nichtflüchtiger computerlesbarer Datenträger nach Anspruch 7, wobei der Computer (800) die Ansicht mit einer Einlage anzeigt, die einen oder mehrere Knoten und einen oder mehrere Ränder zeigt und eine Karte überlagert, die von den Karteninformationen dargestellt wird, wobei die Einlage keine Kartenmerkmale aufweist.

12. Nichtflüchtiger computerlesbarer Datenträger nach Anspruch 7, wobei der Computer (800) die Ansicht derart anzeigt, dass eine von den Karteninformationen dargestellte Karte nur unter einem ersten Abschnitt der Graphenzeichnung liegt, wobei ein zweiter, unterschiedlicher Abschnitt der Graphenzeichnung eine Vielzahl von Knoten und eine Vielzahl von Rändern umfasst und keine Kartenmerkmale aufweist.

## Revendications

1. Procédé d'affichage d'informations utilisant un ordinateur (800), comportant :
l'ordinateur (800) produisant, à partir d'informations qui incluent des informations de graphe et des informations géographiques, un dessin de graphe comportant une pluralité de nœuds et une pluralité de bords ;
l'ordinateur (800) récupérant des informations de carte correspondant aux informations géographiques ; et
l'ordinateur (800) affichant une vue comportant une superposition du dessin de graphe et des informations de carte ; dans lequel la pluralité de nœuds comporte une pluralité de nœuds liés géographiquement qui sont liés à des informations géographiques comportant un emplacement géographique et une pluralité de nœuds logiques n'ayant pas d'emplacement géographique,
**caractérisé par** les étapes suivantes :
- positionnement de la pluralité de nœuds liés géographiquement sur la position correcte sur la carte en fonction des informations géographiques liées ; et
- positionnement de la pluralité de nœuds logiques à l'aide d'une disposition de graphe automatique, la disposition de graphe automatisée tenant compte des positions de la pluralité de nœuds liés géographiquement, dans lequel
la pluralité de nœuds liés géographiquement est différente de la pluralité de nœuds logiques.

2. Procédé selon la revendication 1, dans lequel, pour certains nœuds de la pluralité de nœuds liés géographiquement, les informations géographiques liées d'un nœud respectif au sein de la vue coïncident avec une position de carte dans laquelle est située physiquement une entité physique représentée par le nœud respectif.

3. Procédé selon la revendication 1, dans lequel les informations de carte comportent des premières informations de carte et des secondes informations de carte, les secondes informations de carte représentant une vue plus grande et plus détaillée d'une portion d'une carte représentée par les premières informations de carte.

4. Procédé selon la revendication 1, dans lequel les informations de carte comportent des premières informations de carte et des secondes informations de carte, dans lequel l'ordinateur (800) affiche la vue avec une première carte représentée par les premières informations de carte et une seconde carte représentée par les secondes informations de carte séparées les unes des autres et le dessin de graphe se superposant à la fois sur la première carte et la seconde carte.

5. Procédé selon la revendication 1, dans lequel l'ordinateur (800) affiche la vue avec une incrustation montrant un ou plusieurs nœuds et un ou plusieurs bords et se superposant à une carte représentée par les informations de carte, l'incrustation étant dépourvue de caractéristiques de carte.

6. Procédé selon la revendication 1, dans lequel l'ordinateur (800) affiche la vue de sorte qu'une carte représentée par les informations de carte se trouve sous uniquement une première portion du dessin de graphe, une seconde portion différente du dessin de graphe comportant une pluralité de nœuds et une pluralité de bords et étant dépourvue de caractéristiques de carte.

7. Support non transitoire lisible par ordinateur comportant des instructions pour la mise en œuvre du procédé selon la revendication 1.

8. Support non transitoire lisible par ordinateur selon la revendication 7, dans lequel, pour certains nœuds de la pluralité de nœuds liés géographiquement, les informations géographiques liées du nœud respectif au sein de la vue coïncident avec une position de carte à laquelle est située physiquement une entité physique représentée par le nœud respectif.

9. Support non transitoire lisible par ordinateur selon la revendication 7, dans lequel les informations de carte comportent des premières informations de carte et des secondes informations de carte, les secondes informations de carte représentant une vue plus grande et plus détaillée d'une portion d'une carte représentée par les premières informations de carte.

10. Support non transitoire lisible par ordinateur selon la revendication 7, dans lequel les informations de carte comportent des premières informations de carte et des secondes informations de carte, dans lequel l'ordinateur (800) affiche la vue avec une première carte représentée par les premières informations de carte et une seconde carte représentée par les secondes informations de carte, séparées les unes des autres, et avec le dessin de graphe se superposant à la fois sur la première carte et sur la seconde carte.

11. Support non transitoire lisible par ordinateur selon la revendication 7, dans lequel l'ordinateur (800) affiche la vue avec une incrustation montrant un ou plusieurs nœuds et un ou plusieurs bords et se superposant à une carte représentée par les informations de carte, l'incrustation étant dépourvue de caractéristiques de carte.

12. Support non transitoire lisible par ordinateur selon la revendication 7, dans lequel l'ordinateur (800) affiche la vue de sorte qu'une carte représentée par les informations de carte se trouve sous uniquement une première portion du dessin de graphe, une seconde portion différente du dessin de graphe comportant une pluralité de nœuds et une pluralité de bords et étant dépourvue de caractéristiques de carte.
